Europäisches Patentamt

(19) European Patent Office  (11) Numéro de publication: **0 281 448**

Office européen des brevets  **B1**

(12) **FASCICULE DE BREVET EUROPEEN**

(45) Date de publication du fascicule du brevet: **09.01.91**  (51) Int. Cl.⁵: **B 60 H 1/00**

(21) Numéro de dépôt: **88400290.8**

(22) Date de dépôt: **09.02.88**

(54) **Procédé de montage dans un véhicule automobile d'un appareil de chauffage et/ou de climatisation et unité de montage pour la mise en oeuvre de ce procédé.**

(30) Priorité: **20.02.87 FR 8702270**

(43) Date de publication de la demande:
**07.09.88 Bulletin 88/36**

(45) Mention de la délivrance du brevet:
**09.01.91 Bulletin 91/02**

(84) Etats contractants désignés:
**DE ES GB IT**

(56) Documents cités:
**DE-A-3 401 040**
**FR-A-2 529 514**
**GB-A-1 042 037**

(73) Titulaire: **VALEO**
**64 Avenue de la Grande Armée**
**F-75017 Paris (FR)**

(72) Inventeur: **Danieau, Jacques**
**28, Allée du Hameau fleuri**
**F-78590 Noisy-le-Roi (FR)**

Courier Press, Leamington Spa, England.

**Description**

L'invention concerne le montage d'un appareil de chauffage et/ou de climatisation dans un véhicule automobile.

Les appareils de chauffage et/ou de climatisation de l'habitacle des véhicules automobiles sont habituellement montés sur une cloison transversale séparant l'habitacle et le compartiment moteur antérieur du véhicule. Cette cloison, généralement en tôle métallique, fait partie de la structure du véhicule et contribue à sa rigidité et à sa solidité.

Ledit appareil est fixé sur la cloison sur la chaîne de montage du véhicule. La plupart des éléments de l'appareil viennent à l'intérieur de l'habitacle et, tel que mieux décrit dans la demande de brevet allemand No. 34 01 040, sont donc fixés sur la face de la cloison tournée vers l'habitacle. Il s'agit notamment du radiateur destiné à chauffer l'air à partir d'un fluide caloporteur, du carter portant le groupe moteur-ventilateur qui, traversant ladite cloison, est destiné à entraîner l'air de l'extérieur à travers le radiateur et vers l'habitacle et d'un boîtier contenant les volets de distribution de l'air. D'autres éléments se trouvent à l'extérieur de l'habitacle, sur la face de la cloison tournée vers le compartiment moteur. Il s'agit notamment du séparateur d'entrée d'air, dont le rôle est de séparer l'eau de pluie de l'air prélevé à l'extérieur au-dessous du pare-brise et envoyé vers le ventilateur.

Ce séparateur est habituellement logé dans un compartiment annexe séparé à la fois de l'habitacle et du compartiment moteur ou constitué d'un compartiment intégré à la carrosserie, et d'où l'eau séparée de l'air est rejetée hors du véhicule.

On a constaté que, si certains des éléments de l'appareil disposés à l'intérieur de l'habitacle, notamment le radiateur, ne nécessitent généralement pas d'entretien ni de réparation au cours de la vie du véhicule, il n'en est pas de même du groupe moteur ventilateur et en particulier du moteur. Les interventions mécaniques pour l'entretien sur place ou pour le démontage et le remontage du moteur risquent d'augmenter les coûts de réparations dus essentiellement au manque d'accessibilité et nécessitent des pièces de protection amovibles ou mobiles telles qu'un couvercle compliquant l'élaboration du carter portant le groupe moteur-ventilateur.

Le but de l'invention est d'éliminer cet inconvénient, et de préserver un accès, à partir du compartiment moteur, au groupe moteur-ventilateur fixé sur la face de la cloison séparatrice tournée vers l'habitacle.

L'invention a pour objet le montage, sur une cloison transversale séparant l'habitacle et le compartiment moteur antérieur d'un véhicule automobile, d'un appareil de chauffage et/ou de climatisation de l'habitacle comprenant un groupe moteur-ventilateur, caractérisé en ce qu'on fixe le groupe moteur-ventilateur sur la face de la cloison tournée vers l'habitacle, en regard d'au moins une ouverture ménagée à travers la cloison permettant d'accéder à ce groupe à partir du compartiment moteur.

L'invention s'applique plus particulièrement lorsque l'axe du groupe moteur-ventilateur est dirigé horizontalement et transversalement par rapport au véhicule, l'ouverture d'accès étant prévue dans une portion de paroi de la cloison faisant un angle non nul avec la direction générale transversale de la cloison, et étant traversée par cet axe.

Il peut s'agir d'un groupe moteur-ventilateur constitué d'un moteur entraînant deux turbines disposées de part et d'autre dudit moteur. Mais, de préférence, le moteur est ici disposé entre une seule turbine du ventilateur et l'ouverture d'accès.

L'invention prévoit également que, dans ce cas là, le moteur est entouré et séparé de l'habitacle par une paroi tubulaire s'étendant parallèlement à l'axe du groupe, depuis le boîtier du ventilateur jusqu'à ladite portion de paroi.

Selon une caractéristique particulière de l'invention, on fixe sur la face de la cloison tournée vers le compartiment moteur des organes de traitement de l'air en amont du ventilateur, ces organes étant reliés à au moins une entrée du ventilateur par une ouverture ménagée dans une portion de paroi en angle, ces dernières étant sensiblement symétriques de l'ouverture d'accès et de la portion de paroi correspondante par rapport au plan longitudinal médian du véhicule.

L'invention comporte en principe la fixation sur la face de la cloison tournée vers l'habitacle d'un corps d'appareil comprenant, outre le groupe moteur-ventilateur, d'autres organes de traitement d'air tels qu'échangeur de chaleur, organes de mixage et de distribution de l'air.

Selon un mode de mise en oeuvre de l'invention, on fixe d'abord le groupe moteur-ventilateur (ou le corps d'appareil) sur un tablier indépendant, et on fixe ensuite le tablier sur le corps du véhicule, en l'amenant par le côté de l'habitacle, pour former la cloison transversale de séparation.

Selon un mode de mise en oeuvre, la cloison constituant ou faisant partie de l'unité de montage est un tablier indépendant destiné à être monté sur le corps du véhicule, muni d'éléments d'appareil de chauffage, pour séparer l'habitacle et le compartiment moteur.

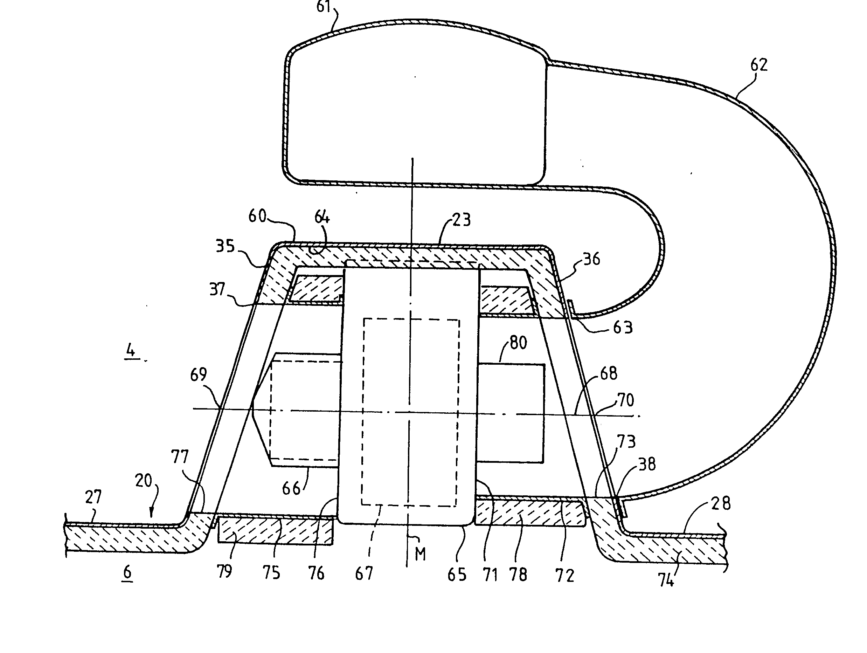

D'autres caractéristiques et avantages de l'invention ressortiront de la description détaillée ci-après et du dessin annexé dans lequel:

la figure unique est une vue partielle de dessus, partiellement en coupe, d'une unité de montage selon l'invention.

La figure unique montre certains éléments d'un appareil de chauffage de l'habitacle d'un véhicule automobile, notamment un groupe moteur-ventilateur, et la partie médiane de la cloison transversale séparant l'habitacle et le compartiment moteur du véhicule, sur laquelle ces éléments sont montés. Le groupe moteur-ventilateur, représenté en vue de dessus, comprend un ventilateur radial 65, 67 dont l'axe 68 est orienté horizontalement et transversalement par rapport au véhicule. La volute 65 du ventilateur est disposée sensiblement symétriquement par rapport au plan longitudinal médian M du véhicule, et s'évase vers le bas en 80 pour fournir une ouverture de sortie élargie. La turbine du ventilateur, indiquée schématiquement en 67, est entraînée par un moteur 66 d'axe 68 disposé à côté du ventilateur.

La cloison de séparation 20 est représentée en coupe selon le plan horizontal passant par l'axe 68, ainsi que des couches d'isolation phonique et/ ou thermique 74 recouvrant la face 64, tournée vers l'habitacle 6, de la cloison. La cloison comprend une portion médiane sensiblement plane 23 orientée transversalement et située en avant de l'axe 68 par rapport au groupe moteur-ventilateur, c'est-à-dire du côté du compartiment moteur 4. A la portion de paroi 23 se raccordent des portions de paroi inclinées 35 et 36 situées respectivement à gauche et à droite du groupe moteur-ventilateur. Les portions de paroi 35 et 36 se raccordent à leur tour respectivement à des portions de paroi latérales respectivement 27 et 28 s'étendant transversalement vers les côtés du véhicule, en arrière du groupe moteur-ventilateur.

Dans les portions de paroi 35 et 36 sont ménagées des ouvertures 37 et 38 respectivement, dont les centres 69 et 70 sont situés sur l'axe 68 du ventilateur. La portion de paroi 36 et l'ouverture 38 sont sensiblement symétriques de la portion de paroi 35 et de l'ouverture 37 par rapport au plan médian M.

Mais il peut être envisagé que les centres des ouvertures 37, 38 ne soient pas situés sur l'axe du ventilateur. Il suffit que l'axe du ventilateur traverse les ouvertures 37, 38.

Sur la face 60 de la plaque-support 20 tournée vers le compartiment moteur du véhicule sont fixés un séparateur air/eau 61 et une tubulure de passage d'air 62 destinée à amener l'air de celui-ci vers le ventilateur, l'extrémité aval 63 de la tubulure 62 venant en coïncidence avec l'ouverture 38 ménagée dans la paroi oblique 36 de la cloison.

A partir de la face d'entrée 71 de la volute 65, un tube à paroi mince 72 s'étend vers la portion de paroi 36 et se raccorde à l'ouverture 38 de celle-ci par l'intermédiaire d'une ouverture correspondante 73 prévue dans les couches isolantes 74 recouvrant la face 64 de la plaque-support. Les ouvertures 38 et 73 et le tube 72 définissent donc un passage d'air entre la tubulure 62 et le ventilateur 65.

Un tube analogue 75 s'étend à partir de la face opposée 76 de la volute vers la portion de paroi 35 pour atteindre les couches isolantes 74, percées d'une ouverture 77 en correspondance de l'ouverture 37. Les tubes 72 et 75 sont recouverts extérieurement de couches isolantes, respectivement 78 et 79.

Les dimensions des ouvertures 37 et 77 et le diamètre du tube 75 sont suffisants pour permettre l'accès au moteur 66 et à la turbine 67 à partir du compartiment moteur, donc à travers l'ouverture 37, et pour permettre l'extraction de ces composants par la même voie pour réparation ou remplacement.

Selon l'invention, on peut fixer sur la face 64 de la plaque-support 20 un corps d'appareil comprenant, outre le ventilateur 65, 67, le moteur 66 et les tubes 72 et 75, d'autres composants non visibles sur la figure, notamment un radiateur propre à chauffer l'air sortant du ventilateur, des volets de mixage et des raccords pour envoyer l'air traité vers différents points de l'habitacle et vers le pare-brise pour le dégivrage ou le désembuage de celui-ci. Un tel corps d'appareil peut comprendre également les organes de commande de l'appareil et les liaisons électriques nécessaires.

Une façade décorative peut être ajoutée à l'unité de montage décrite pour adapter celle-ci au style souhaité pour le véhicule, cette façade dissimulant notamment les couches isolantes 74, 78 et 79.

La cloison 20 peut être intégrée au corps du véhicule, et recevoir les éléments de l'appareil de chauffage ou de climatisation sur la chaîne de montage.

Alternativement, il peut s'agir d'une plaque-support formant tablier indépendant, sur laquelle ces éléments sont fixés dans un atelier séparé et qu'on fixe ensuite sur le corps du véhicule, en l'amenant par le côté de l'habitacle pour séparer ce dernier du compartiment moteur.

Bien que décrite en détail dans son application au montage d'un appareil de chauffage, l'invention s'applique sans autre difficulté au montage d'un appareil de climatisation.

**Revendications**

1. Appareil de chauffage et/ou de climatisation de l'habitacle d'un véhicule automobile, monté sur une cloison transversale (20) séparant l'habitacle (6) et le compartiment moteur antérieur (4), comprenant un groupe moteur-ventilateur (66, 67) monté dans un carter (65), caractérisé en ce que le groupe moteur-ventilateur est fixé sur la face (64) de la cloison (20) tournée vers l'habitacle, en regard au moins d'une ouverture (37) ménagée à travers la cloison permettant d'accéder à ce groupe à partir du compartiment moteur.

2. Appareil de chauffage et/ou de climatisation selon la revendication 1, caractérisé en ce que l'axe (68) du groupe moteur-ventilateur est dirigé horizontalement et transversalement par rapport au véhicule, et que l'ouverture d'accès (37) est prévue dans une portion de paroi (35) de la cloison faisant un angle non nul avec la direction générale transversale de la cloison, et est traversée par cet axe.

3. Appareil de chauffage et/ou de climatisation selon la revendication 2, caractérisé en ce que le moteur (66) est disposé entre la turbine (67) du ventilateur et l'ouverture d'accès (37).

4. Appareil de chauffage et/ou de climatisation selon la revendication 3, caractérisé en ce que le moteur (66) est entouré et séparé de l'habitacle par une paroi tubulaire (75) s'étendant parallèlement à l'axe du groupe depuis le boîtier (65) du ventilateur jusqu'à ladite portion de paroi (35).

5. Appareil de chauffage et/ou de climatisation selon la revendication 2, caractérisé en ce que des organes (61) de traitement de l'air en amont du ventilateur sont fixés sur la face (60) de la cloison (20) tournée vers le compartiment moteur (4), ces organes étant reliés à au moins une entrée du ventilateur par une ouverture (38) ménagée dans une portion de paroi (36) en angle, ces dernières étant sensiblement symétriques de l'ouverture d'accès (37) et de la portion de paroi correspondante (35) par rapport au plan longitudinal médian (M) du véhicule.

6. Appareil de chauffage et/ou de climatisation selon l'une des revendications précédentes, caractérisé en ce que les ouvertures (37, 38) ménagées dans les parois (35, 36) sont reliées au groupe moteur-ventilateur (65, 67) par des parois tubulaires (75, 72) s'étendant desdites parois au groupe moteur-ventilateur.

7. Appareil de chauffage et/ou de climatisation selon l'une des revendications précédentes, caractérisé en ce que, sur la face (64) de la cloison (20) tournée vers l'habitacle, est fixé un corps d'appareil comprenant, outre le groupe moteur-ventilateur, d'autres organes de traitement d'air tels qu'échangeur de chaleur, organes de mixage et boîtier contenant les volets de distribution de l'air.

8. Appareil de chauffage et/ou de climatisation selon l'une des revendications précédentes, caractérisé en ce qu'est fixé d'abord le groupe moteur-ventilateur (65, 67) sur un tablier indépendant, et qu'est fixé ensuite le tablier sur le corps du véhicule, en l'amenant par le côté de l'habitacle, pour former la cloison transversale de séparation.

9. Appareil de chauffage et/ou de climatisation selon l'une des revendications précédentes, caractérisé en ce que la cloison est constituée par un tablier indépendant destiné à être monté transversalement sur le corps du véhicule, muni d'éléments d'appareil de chauffage, pour séparer l'habitacle et le compartiment moteur.

**Patentansprüche**

1. Heiz- und/oder Belüftungsanlage für die Kabine eines Kraftfahrzeugs, angebracht an einer Querwand (20) zur Trennung der Kabine (6) und des vorderen Motorraums (4), enthaltend einen Lüftersatz (66, 67) in einem Gehäuse (65), dadurch gekennzeichnet, daß der Lüftersatz auf der der Kabine zugewandten Vorderseite (64) der Trennwand (20) gegenüber wenigstens einer Öffnung (37) angebracht ist, die quer durch die Trennwand verläuft und den Zugang zu diesem Satz vom Motorraum aus erlaubt.

2. Heiz- und/oder Belüftungsanlage nach Anspruch 1, dadurch gekennzeichnet, daß die Achse (68) des Lüftersatzes im Verhältnis zum Fahrzeug horizontal und in Querrichtung ausgerichtet ist und daß die Zugangsöffnung (37) in einem Teil (35) der Trennwand vorgesehen ist, dessen Winkelstellung zur allgemeinen Querrichtung der Trennwand nicht gleich Null ist, und wodurch diese Achse verläuft.

3. Heiz- und/oder Belüftungsanlage nach Anspruch 2, dadurch gekennzeichnet, daß der Motor (66) zwischen der Turbine (67) des Ventilators und der Zugangsöffnung (37) angeordnet ist.

4. Heiz- und/oder Belüftungsanlage nach Anspruch 3, dadurch gekennzeichnet, daß der Motor (66) von einer rohrförmigen Wand (75) umgeben und durch diese von der Kabine getrennt ist, die sich, ausgehend vom Gehäuse (65) des Ventilators parallel zur Achse des Lüftersatzes bis zum genannten Wandteil (35) erstreckt.

5. Heiz- und/oder Belüftungsanlage nach Anspruch 2, dadurch gekennzeichnet, daß Luftaufbereitungsorgane (61) oberhalb des Ventilators an der Vorderseite (60) der Trennwand (20) befestigt sind, die dem Motorraum (4) zugewandt ist, wobei diese Organe mit wenigstens einem Ventilatoreingang durch eine Öffnung (38) verbunden sind, welche in einem winkelförmigen Wandteil (36) angebracht ist, während letztere zur Zugangsöffnung (37) und zu dem entsprechenden Wandteil (35) im Verhältnis zur mittleren Längsebene (M) des Fahrzeugs im wesentlichen symmetrisch angeordnet sind.

6. Heiz- und/oder Belüftungsanlage nach einem der vorherigen Ansprüche, dadurch gekennzeichnet, daß die in den Wänden (35, 36) angebrachten Öffnungen (37, 38) mit dem Lüftersatz (65, 67) durch rohrförmige Wände (75, 72) verbunden sind, die sich von den genannten Wänden bis zum Lüftersatz erstrecken.

7. Heiz- und/oder Belüftungsanlage nach einem der vorherigen Ansprüche, dadurch gekennzeichnet, daß an der der Kabine zugewandten Vorderseite (64) der Trennwand (20) ein Gerätekörper befestigt ist, der neben dem Lüftersatz weitere Luftaufbereitungsorgane, wie z.B. einen Wärmeaustauscher, Mischorgane und ein Gehäuse, einschließt, welches die Luftverteilerklappen enthält.

8. Heiz- und/oder Belüftungsanlage nach einem der vorherigen Ansprüche, dadurch gekennzeichnet, daß zunächst der Lüftersatz (65, 67) an einem unabhängigen Element befestigt und dann dieses Element an der Fahrzeugkarosserie angebracht wird, indem es von der Kabinenseite eingesetzt wird, um die in Querrichtung verlaufende Trennwand zu bilden.

9. Heiz- und/oder Belüftungsanlage nach einem der vorherigen Ansprüche, dadurch gekennzeichnet, daß die Trennwand aus einem unabhängigen Element besteht, welches dazu bestimmt ist, zur Trennung von Kabine und Motorraum in Querrichtung an der Fahrzeugkarosserie befestigt zu werden und welches mit Heizelementen versehen ist.

**Claims**

1. Heating and/or air conditioning apparatus for the cabin of an automotive vehicle, mounted on a transverse bulkhead (20) separating the cabin (6) from the front engine compartment (4) and comprising a motor-blower unit (66, 67) mounted in a casing (65), characterised in that the motor-blower unit is secured on the face (64) of the bulkhead (20) which is directed towards the cabin, in line with at least one opening (37) which is formed through the bulkhead to afford access to the said unit from the engine compartment.

2. Heating and/or air conditioning apparatus according to Claim 1, characterised in that the axis (68) of the motor-blower unit is orientated horizontally and transversely with respect to the vehicle, and that the access opening (37) is provided in a wall portion (35) of the bulkhead making an angle other than zero with the general transverse direction of the bulkhead, and is intersected by the said axis.

3. Heating and/or air conditioning apparatus according to Claim 2, characterised in that the motor (66) is disposed between the rotor (67) of the blower and the access opening (37).

4. Heating and/or air conditioning apparatus according to Claim 3, characterised in that the motor (66) is surrounded by, and separated from the cabin by, a tubular wall (75) which extends, parallel to the axis of the unit, from the casing (65) of the blower to the said wall portion (35).

5. Heating and/or air conditioning apparatus according to Claim 2, characterised in that air treatment means (61), for treatment of the air upstream of the blower, are secured on the face (60) of the bulkhead (20) which is directed towards the engine compartment (4), the said means being connected to at least one blower inlet through an opening (38) which is formed in an inclined wall portion (36), these latter being substantially symmetrical with the access opening (37) and with the corresponding wall portion (35), by reference to the median longitudinal plane (M) of the vehicle.

6. Heating and/or air conditioning apparatus according to one of the preceding Claims, characterised in that the openings (37, 38) that are formed in the walls (35, 36) are connected to the motor-blower unit (65, 67) through tubular walls (75 72) which extend from the said walls to the motor-blower unit.

7. Heating and/or air conditioning apparatus according to one of the preceding Claims, characterised in that, on the face (64) of the bulkhead (20) that is directed towards the cabin, there is secured a body of equipment comprising, apart from the motor-blower unit, further air treatment means such as a heat exchanger, mixing devices and a housing containing the air distribution vents.

8. Heating and/or air conditioning apparatus according to one of the preceding Claims, characterised in that the motor-blower unit (65, 67) is first secured on an independent plate, and that the said plate is subsequently secured on to the body of the vehicle by placing it at the side of the cabin so as to constitute the transverse separating bulkhead.

9. Heating and/or air conditioning apparatus according to one of the preceding Claims, characterised in that the bulkhead comprises an independent plate which is adapted to be mounted transversely on the body of the vehicle, and which is provided with elements of heating apparatus, whereby to separate the cabin from the engine compartment.